# EUROPEAN PATENT APPLICATION

(11) **EP 3 757 074 A1**
(43) Date of publication of application: **30.12.2020**
(21) Application number: 19382544.5
(22) Date of filing: 26.06.2019
(51) Int. Cl.: C02F 3/00, C02F 3/12, C02F 3/30, C02F 101/16, C02F 103/22, C02F 103/32

(54) **A METHOD FOR REMOVING NITROGEN FROM WASTEWATER IN A SEQUENCING BATCH REACTOR WITH AN AEROBIC GRANULAR BIOMASS**

(71) Applicant: Fundación Centro Gallego de Investigaciones del Agua, 15782 Santiago de Compostela (ES)
(72) Inventor: CASTRO BARROS, Celia María, 36636 RIBADUMIA (ES)
(74) Representative: Sugrañes Patentes y Marcas

(57) **Abstract**

A method for removing nitrogen from wastewater in a sequencing batch reactor (SBR) with an aerobic granular biomass, which comprises performing consecutive treatment cycles comprising a reaction phase between at least partial reactor filling and draining operations, during which the level of dissolved oxygen (DO) in the water is monitored, and wherein said reaction phase comprises a first feast period a) under aerobic conditions, until the removal of substantially all the biodegradable organic matter; a second famine period b), during which there is active aeration control to keep the dissolved oxygen (DO) within a pre-established range to promote nitrification and denitrification processes; and a third also famine period c), which utilises the inertia of the conditions reached inside the reactor to enhance denitrification and the removal of total nitrogen.

## Description

### Technical field of the invention

The invention relates to a method for removing nitrogen from wastewater in a sequencing batch reactor with an aerobic granular biomass. The method is of particular interest for water with relatively intermediate or high organic matter content. Examples of wastewater of this type are wastewater of the canning industry or the meat industry, as non-limiting examples.

### Background of the invention

The biological treatment of wastewater by means of applying active sludge systems is widely known. It essentially consists of the development of a dispersed bacterial culture in the form of a floc in a tank that is agitated, aired and fed with the wastewater, which is capable of metabolising as nutrients the biological contaminants present in that water.

These solutions require large surfaces and present another drawback related to poor sludge settling capacity.

For the purpose of improving these aspects, improved techniques using granular biomass, hereinafter referred to as granular sludge, have been developed. The granular sludge is formed by microbial aggregates that do not require a non-natural core or support and settle significantly faster than activated sludge flocs do.

Granulation can be promoted under certain environmental conditions. For example, in sequential batch reactors, also referred to as SBR, short feed times are used to create feast periods followed by famine periods, which are characterised by the presence or absence, respectively, of organic matter in the liquid medium, and the medium is subjected at the same time to high hydrodynamic shear forces.

The bacteria is not distributed equally in the granule, since some are more abundant in the outer layers of the granule and others are more abundant in its innermost part. Conceptual models often simplify the granular structure by considering granules as a multilayer sphere with oxygen and a substrate with a gradient decreasing from the outside to the core of the granule. According to these models, the nitrifying organisms are found in the outer layers, penetrable by oxygen, whereas the denitrifying organisms and the phosphate accumulating organisms (PAOs) are found in the inner layers.

Therefore, in the granular sludge different reaction areas are simultaneously present in each granule, allowing aerobic conditions from the outermost layer to the innermost layer which enable the biological oxidation of organic matter and nitrification; anoxic conditions favouring denitrification; and anaerobic conditions favouring the removal of phosphorus.

Then, the treatment of wastewater based on granular sludge technology can perform the removal of organic matter, nitrogen and phosphorus simultaneously, which confers to it significant advantages compared to conventional activated sludge treatment systems: a reduction in implementation space, energy savings and operating cost savings.

However, the long-term stability of the system and the high removal of organic matter and nitrogen are not direct. On the one hand, the removal of organic matter from the system requires aerobic conditions and, on the other hand, the removal of nitrogen needs aerobic and anoxic conditions. Commonly, nitrogen is removed from wastewater in two steps: oxidation of ammonium to nitrite (partial nitrification) and/or nitrate (nitrification) for which aerobic conditions are required; and the reduction of nitrate (or nitrite) to gaseous nitrogen (denitrification), for which anoxic conditions are needed. Therefore, it is not possible to completely remove the ammoniacal nitrogen if only high oxygen concentrations and high aeration are applied, since in this situation the anoxic conditions in the granules are not sufficient for carrying out denitrification.

Additionally, some studies have demonstrated that low oxygen concentrations (less than 40 % of oxygen saturation) increase the removal of nitrogen, but these long-term low oxygen concentrations promote the breaking of the granules, the proliferation of filamentous bacteria and overall instability (Mosquera-Corral A, De Kreuk MK, Heijnen JJ, Van Loosdrecht MCM. 2005. Effects of dissolved oxygen on N-removal in an aerobic granular sludge reactor. Wat. Res. 39(12); 2676-2686.).

In conclusion, there is a difficult balance to maintain between the high efficiencies of the removal of nitrogen and the stability of the granules in aerobic granular sludge systems.

A first objective of the present invention is a method which allows necessarily balancing these somewhat contradictory needs, and which therefore allows maintaining the stability of the system and at the same time is efficient both for the removal of organic matter and for the removal of nitrogen.

To enable applying aerobic granular sludge technology with the simultaneous removal of organic matter and nutrients without compromising the stability of the system, researchers from the of the Delft University of Technology have established a method based on the development of slow growing organisms (Kreuk and van Loosdrecht, 2004), which confers high density and stability to the granular system. Therefore, they can reduce the oxygen concentration of the system and improve the removal of nitrogen.

Patent document EP 1542932 discloses a method for the treatment of wastewater with organic nutrients in which the wastewater is placed in contact with granular sludge, an oxygen-comprising gas is fed to the sludge granules and then the granules are allowed to settle and the wastewater free of organic nutrients is discharged. This method has been exploited under the Nereda® name.

The method is characterised in that in a first step the wastewater is fed to the granules under anaerobic conditions. Then, in a second step an oxygen-comprising gas is introduced, and in a third step of settling, the granules are left to settle.

The conditions in the first step are therefore low oxygen conditions and virtually anaerobic, since oxygen is not added. In this first step the granules take up organic nutrients from the supplied wastewater, and they are stored inside the microorganisms in the form of a polymer, such as polybetahydroxybutyrate. According to EP 1542932, the supply of oxygen in this step could impede the mentioned storage of the organic nutrient.

This strategy has two limitations: The wastewater must have sufficient phosphorus; and the storage of organic nutrients is limited, so this strategy is only effective for organic wastewater with relatively low organic matter (COD) concentrations (about 500-600 mg O₂/l).

Another objective of the present invention is therefore a more versatile method that is efficient for the treatment of not only wastewater with a low organic matter content (such as municipal wastewater) but also with wastewater with an intermediate or high organic matter content (as in the case of certain industrial wastewater).

To reach the anaerobic conditions and then introduce a gas with oxygen in an SBR reactor, for example, to put the method according to EP 1542932 into practice, it is possible to act on the aeration means with which the reactor is conventionally equipped. Such aeration means comprise diffusers or nozzles which blow fresh air and are complemented with other means such as mechanical agitators or means for the recirculation of the gas released by the water being treated.

In the literature, proposals for implementing control of the operation of such aeration means in biofilm systems (with microorganism film growth around an artificial core or support) and granular sludge systems can be found, but they are based on the measurement of ammonium and oxygen. One example is described in patent document WO 2015011213.

WO 2015011213 specifically relates to a method for improving the removal of nitrogen in an SBR reactor with a granular biomass, which method comprises applying a control strategy for controlling at least part of the conditions of the process in said SBR reactor. The method comprises establishing at least one constant dissolved oxygen (DO) concentration set-point value and maintaining said established constant value for at least one operating cycle of the reactor, for which it comprises the on-line measuring of the ammonium concentration in the effluent of the reactor during an operating cycle and calculating the dissolved oxygen (DO) concentration set-point value for a consecutive operating cycle based on the result of said ammonium concentration measurement.

It happens that ammonium sensors must be calibrated rather frequently and occasionally present drift issues. In general, they incorporate expensive probes, produce interferences in the measurement with high salinity and present a certain measurement range limitation.

Another objective of the present invention is also a method which overcomes this drawback related to the necessary recalibration of the ammonium sensors and to their insufficient precision.

### Disclosure of the invention

To achieve these and other objectives, a method for removing nitrogen from wastewater in a sequencing batch reactor (SBR) with an aerobic granular biomass is proposed, which method comprises performing consecutive treatment cycles comprising a reaction phase during which the level of dissolved oxygen (DO) in the water is monitored, between at least partial reactor filling and draining operations, and wherein said reaction phase comprises
- a first feast period a) under aerobic conditions, until the removal of substantially all the biodegradable organic matter,
- a second famine period b), during which there is active aeration control to keep the dissolved oxygen (DO) within a pre-established range to promote nitrification and denitrification processes, and
- a third also famine period c), which utilises the inertia of the conditions reached inside the reactor to promote denitrification and the removal of total nitrogen.

It should be mentioned that the method does not include an anaerobic phase for biopolymer accumulation. This accumulation is performed in the present method under aerobic conditions and the organic nutrients of the wastewater being treated are stored in the form of a polymer mainly inside the microorganisms, bacteria, aerobic heterotrophs instead of in phosphate accumulating organisms (PAOs), as proposed in EP 1542932.

Therefore, the method of the invention is also suitable for granular sludge systems treating wastewater with an intermediate or high organic matter and nitrogen content where the presence of phosphorus in the system is not necessary (since the biopolymer accumulation does not occur with PAOs). The fact that the reaction phase begins under aerobic conditions contributes to precisely this.

In the context of the present invention, wastewater is considered to have an intermediate or high organic matter content when the total Chemical Oxygen Demand (CODt) is greater than 1000 mg O₂/l.

This means that the method of the invention is of interest for the treatment of loaded wastewater from the food industry. Some examples of the sectors of potential application are the winemaking sector (6000-10000 mg COD/I), the vegetable canning industry (1000-8000 mg COD/I) or the fish and shellfish canning industry (2000-15000 mg COD/I)

It should also be mentioned that dissolved oxygen (DO) control is only carried out once the feast period a) has ended. Only then can the dissolved oxygen (DO) input be lowered without compromising the stability of the granulation. During the following famine periods b) and c), and provided that dissolved oxygen (DO) is kept relatively low, denitrification takes place since the anoxic part of the granule increases as dissolved oxygen (DO) decreases.

When the present invention refers to cycles comprising a reaction phase between at least partial reactor filling and draining operations, it does not exclude said filling and draining operations from being simultaneous, or being able to carry out other operations between the reaction phase and the filling and draining operations, such as, for example, sedimentation or settling between the reaction phase and the draining operation. All this is as will be explained through examples below.

Advantageously, the present method obtains high efficiency in the removal of nitrogen without compromising the stability of the granular system.

The total duration of the reaction phase in the cycles of the SBR reactor must be sufficient for the removal of the contaminants in the wastewater: that is removal and internal accumulation of organic matter in the form of biopolymers (during feast period a)) and removal of nitrogen (during the following famine periods b) and c)).

In one embodiment, during period a) aeration is maintained at a constant regimen and the duration *t1* of period a) is, at minimum, that necessary to reach a stable dissolved oxygen (DO) concentration.

Preferably, the stable dissolved oxygen (DO) concentration corresponds to 60-70 % of the saturation concentration.

The theoretical purpose of the feast period is considered when substantially all the biodegradable organic matter has been consumed. By taking advantage of this principle, the transition between the feast period a) and the famine period b), can be identified when, with the duration *t1* of the first period a) having been surpassed, a sustained increase in dissolved oxygen (DO) above a first predetermined threshold value is detected.

Accordingly, in the method of the invention the end of the feast period a) (organic matter consumption/accumulation) is determined with the dissolved oxygen (DO) measurement (easy and reliable measurement).

Then, active control is applied during the famine period b), as explained below, regulating aeration to keep the dissolved oxygen (DO) in the medium at the optimal level to favour the removal of nitrogen. If the dissolved oxygen (DO) concentration decreases when there is no organic matter in the system, there is no risk of filamentous bacteria growth and the breaking of the granules. Unlike other control systems, putting the method of the invention into practice only involves the dissolved oxygen (DO) measurement concentration, which is simple and reliable and does not require the measurement of other parameters such as the level of ammonium present in the medium or in the effluent of the reactor.

When referring to dissolved oxygen (DO), the skilled person will understand that it can be the dissolved oxygen concentration (mgO₂/l) or the % of dissolved oxygen saturation (%). If the changes in temperature are not abrupt during a cycle, it is preferable, however, to use the DO concentration, since it provides the DO available in the wastewater.

According to an embodiment of the invention, there is considered to be a sustained increase in dissolved oxygen (DO) when a dissolved oxygen slope indicator (SLOPE) is greater than the first predetermined threshold value (ref1 SLOPE) during a period t2.

The value of this indicator (SLOPE) can be estimated by applying the formula: $SLOPE = \frac{DOʹ \left({t}_{n}\right) - DOʹ \left({t}_{n - k}\right)}{{t}_{n} - {t}_{n - k}}$ where
tₙ is the moment of calculation
tₙ₋ₖ is a prior moment
DO' is a mean of the instantaneous DO value and of the DO value of at least three prior moments (when there is a continuous DO measurement, it is possible to work with the recorded DO values spaced apart with a frequency of a few seconds or minutes).

As already mentioned above, in one embodiment of the present method, during the second famine period b), of duration *t4,* a control logic is applied to keep the dissolved oxygen (DO) value between a low threshold value (DO-L) and a high threshold value (DO-H) which contemplates
a) comparing the instantaneous dissolved oxygen (DO) value with the low threshold value (DO-L) and high threshold value (DO-H);
b) reducing the aeration regimen if the instantaneous dissolved oxygen (DO) value is greater than the high threshold value (DO-H) or increasing the aeration regimen if the instantaneous dissolved oxygen (DO) value is lower than the low threshold value (DO-L);
c) waiting for a stabilisation period *t3* and repeating in a loop the sequence a), b), c).

In situations in which the instantaneous dissolved oxygen (DO) value is within the range defined by the low and high thresholds (DO-H and DO-L), maintaining the last aeration regimen that was imposed in the immediately previous loop is contemplated.

Possible value pairs for the high and low thresholds (DO-H and DO-L, respectively) can be selected in the range of 6 mg O2/l to 1 mg O2/l; 6 mg O2/l to 2 mg O2/l; 5.5 mg O2/l to 2.5 mg O2/l.

The invention contemplates that the duration *t4* of the second famine period b) with active dissolved oxygen (DO) control is a predetermined time, set by the operator. In this case, the value of *t4* will preferably be set taking into account the properties of the influent, specifically the amount of ammonium.

It is of interest for time t4 to be lower than the time needed to perform complete oxidation of the ammonium of the wastewater. For example, it has been observed that for wastewater with an ammonium content of 450-490 mg N/l, 3 hours are required for complete oxidation of the ammonium. In this case, time *t4* will be 1.5-2 h. In wastewater with a low ammonium content (15-30 mg N/l), *t4* will be a few minutes, always less than that needed to complete the oxidation of ammonium of the water.

The invention also contemplates that the duration *t4* of the second famine period b), is variable for each cycle. For example, it is conceived that after a minimum time *t4min,* period b), and with it active aeration control, stops when the instantaneous dissolved oxygen (DO) value is repeatedly within the range defined by the low and high thresholds (DO-H and DO-L) a given number of consecutive loops.

In any case, upon reaching the duration *t4* established for active aeration control during period b), period c) is started, initially maintaining the last aeration regimen conditions imposed at the end of the previous period b). Preferably, said conditions are maintained until the end of period c) as long as a sustained increase in dissolved oxygen (DO) above a second specific threshold value is not detected.

The first and the second threshold values can be the same, as well as the manner of determining whether or not an in increase in dissolved oxygen (DO) is sustained to identify the end of the feast period a) and to determine if a change in the aeration regimen is needed once period c) has started.

Therefore, in one embodiment the criterion applied to determine if there is a sustained increase in dissolved oxygen (DO) during period c) is the same applied to trigger the transition between the period a) and the period b).

In another embodiment, the second specific threshold value is less than the first specific threshold value.

If a sustained increase in dissolved oxygen (DO) above the second specific threshold value during period c) is detected, the aeration regimen can be reduced to a minimum or only mechanical agitation is applied to the water being treated until the end of the period c), which will last until the end of the cycle it has programmed.

The total time of an operating cycle will be sufficient for performing the biological removal of organic matter and nitrogen from the wastewater. In general, water with a high organic matter and nitrogen concentration will need a much longer operating cycle than water with a low content of these contaminants. A high biodegradable organic matter concentration will involve a longer period a) and if this is combined with the high nitrogen concentration, periods b) and c) also will be long. Typical loaded water cycles could have a duration of 6 to 24 h. When the water has a low load (< 1000 mg COD/I) and the nitrogen content is low, 3 h could be sufficient for the operating cycle.

When there is a high nitrogen content and nitrification and denitrification are needed for the removal thereof, in period c), after t4, a rise in dissolved oxygen (DO) will be detected and will indicate that the ammonium has been completely oxidised. At that time, denitrification will be encouraged by means of lowering aeration to the minimum level or mechanical agitation will be applied. In this case, the duration of period c) will be linked to the time needed for denitrification and the complete removal of nitrogen.

The non-detection of a rise in dissolved oxygen (DO) after t4 during period c) might be because of 2 factors. On the one hand, the nitrogen from the wastewater may possibly be very low and removal may take place in the previous periods a) and/or b), such that the period c) would be brief and consist of a prolongation of the period b) with low aeration and/or mechanical agitation. However, the ammonium content may be very high and the duration of the cycle insufficient for complete oxidation thereof, which would mean that the dissolved oxygen (DO) does not increase after t4. This situation would be detected after analysis of the effluent, which would contain ammonium that has been oxidised. In this case, the cycle time, and particularly the time *t4* of the period b), would have to be increased.

### Brief description of the drawings

Fig. 1 graphically illustrates, by means of a block diagram, a possible control logic for active aeration control during the famine period b), according to a variant of the invention;
Fig. 2 shows the appearance of the granules cultured in an SBR laboratory reactor fed with pig manure;
Fig. 3 shows the yield for the removal of organic matter from the reactor for a period of 76 days, without aeration control during the reaction phase;
Fig. 4 shows the conversion of the nitrogen species during the same period of 76 days, without aeration control during the reaction phase;
Fig. 5 shows aeration and pH during 1 representative cycle of the method according to the invention;
Fig. 6 shows the aspect of the granules developed during the performance of cycles without aeration control and with active aeration control, according to the invention.

### Detailed description of an embodiment

To put the method into practice, one embodiment proposes monitoring the dissolved oxygen (DO) concentration in the medium. Monitoring is understood to mean observing, by means of suitable apparatus, the course of one or more physiological or other type of parameters for detecting possible anomalies, in the present case the dissolved oxygen (DO) concentration. This observation can be continuous or at intervals (discrete) but in this case followed sufficiently so as to enable following in real time the evolution of the conditions in the medium and taking the suitable measurements.

As described below, other parameters in addition to dissolved oxygen (DO) can also be monitored, such as pH, to make the method more reliable if it is of interest.

In this embodiment, the SBR reactor is equipped with one or more conventional operable fine bubble diffusers, at least according to the following actuation regimens: Q1 (operation at 80 % of its capacity); Q2 (operation at 60 % of its capacity); Q3 (operation at 40 % of its capacity); Q4 (operation at 20 % of its capacity); Q0 (off). In association with the diffusers, the reactor is equipped with valve means for feeding fresh air (VA1) or recirculated air (VA2) to the diffusers, which can be operated at least in the open and closed positions (OPEN/CLOSE).

The reactor will also be equipped with a conventional mechanical agitating unit, operable at least for being actuated or shut down (ON/OFF).

### Period a)

For the first period a), the reactor is operated without active dissolved oxygen (DO) concentration control. During this feast period a) the diffusers are operated in their regimen Q1 during a time *t1* sufficient for reaching in the medium a stable dissolved oxygen (DO) concentration of between the 60-70 % of its saturation value.

A possible value for *t1* can be 5-10 min.

### Period b)

Once time *t1* has been surpassed, when a sustained increase in dissolved oxygen (DO) concentration is detected, active dissolved oxygen control begins by means of varying the frequency of the blower associated with the diffusers.

To determine the occurrence of this sustained increase, the evolution of the dissolved oxygen (DO) concentration is followed through the value of its slope, for example, by means of the formula $SLOPE = \frac{DOʹ \left({t}_{n}\right) - DOʹ \left({t}_{n - k}\right)}{{t}_{n} - {t}_{n - k}}$ where
tn is the moment of calculation,
tn-k is a prior moment, k being selected from 10 to 30 min,
DO' is a mean of the instantaneous DO value and of the DO value in three prior moments.

The mentioned sustained increase is considered to occur when the SLOPE value surpasses a specific threshold value ref1 SLOPE, during a time t2.

A recommended value for t2 is 5 to 20 min.

A possible value for ref1 SLOPE is 1 mg O₂/l/h.

To put the active control into practice during period b), the following operating variables have been taken into account in the present embodiment of the method.

**Table 1: Description of the variables which can be operated/modified for performing active aeration control during period b) of the method.**

| ***Parameter*** | *Possible value(s)* | *Example* |
|---|---|---|
| **Control variable** | | |
| Dissolved oxygen **(DO)** | Low DO threshold (DO-L) | 4 mg O₂/l |
| | High DO threshold (DOH) | 6 mg O₂/l |

| **Operable variables** | | |
|---|---|---|
| % of the diffuser **(Q)** | Initial regimen (Q1) | 80 % |
| | High aeration (Q2) | 60 % |
| | Intermediate aeration (Q3) | 40 % |
| | Minimum aeration (Q4) | 20 % |
| Fresh air valve **(VA1)** | OPEN / CLOSE | - |
| Valve of recirculation **(VA2)** | OPEN / CLOSE | - |
| Agitator **(Mix)** | ON / OFF | - |

| **Others** | | |
|---|---|---|
| Waiting time (*t3*) | - | 20 s |
| Period b) time of duration (*t4*) | - | 2 h |

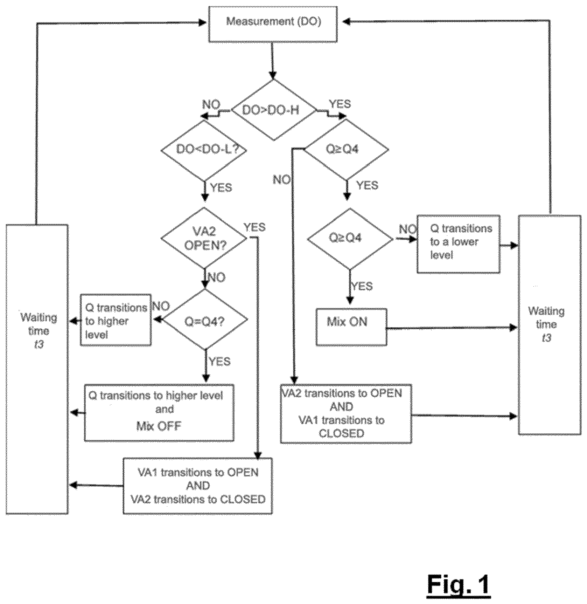

Fig. 1 graphically illustrates, by means of a block diagram, the proposed control logic. It consists of a comparison loop which is essentially based on comparing the instantaneous dissolved oxygen (DO) value with the low threshold value (DO-L) and high threshold value (DO-H) and acting on the blower and/or fresh air and recirculation valves (VA1 and VA2), as well as on the agitator (Mix), regardless of the result of this comparison and the prior state of the system (the state imposed in the immediately previous loop).

The right side of the logic tree of Fig. 1 imposes reducing the aeration regimen if the instantaneous dissolved oxygen (DO) value is greater than the high threshold value (DO-H); and the left side of the logic tree imposes increasing the aeration regimen if the instantaneous dissolved oxygen (DO) value is lower than the low threshold value (DO-L). In those extreme cases, with dissolved oxygen (DO) values above the high threshold value (DO-H) and with the aeration regimen at a minimum or with dissolved oxygen (DO) values below the high threshold value (DO-L) and with the aeration regimen at a maximum, acting on other equipment such as the valves and the agitator is contemplated. In any case, a stabilisation time t3 is imposed before repeating the comparison in a new loop.

A possible value for this stabilisation time t3 can be 20 s.

Naturally, the regulation levels of the diffuser can be envisaged to be higher than the four levels Q1 to Q4 proposed in the described embodiment, only by way of example, of the method according to the invention. Likewise, operating with relative and not absolute values is contemplated. For example, with loops the control logic of which imposes increasing or reducing by 5 % the capacity of the diffusers until reaching maximum and minimum values. This more precise variation in control must be verified with the specifications and the robustness of the available blower or blowers. For large-scale systems, in practice more than one blower is needed and the same philosophy is applied in that case. That is, the control logic can impose switching on or off one or more blowers of a group of blowers combined with the possibility of individually increasing or reducing the operating regimen of said blowers.

Similarly, the mechanical agitator is envisaged, in addition to being controlled to be switched on or off, to also enable being operated to regulate its speed.

In the example logic tree, when aeration is sufficient to meet this requirement, mechanical agitation is not necessary, and when aeration is not sufficient, mechanical agitation is activated. Nevertheless, mechanical agitation will be used only when the granules are sufficiently dense and do not break when subjected to mechanical agitation.

A possible value for the time *t4* of duration of the period b) can be established, for example, at 2 h.

In any case, this time *t4* must be lower than that needed to obtain complete oxidation of ammonium, such that in water with a high ammonium concentration, this time will be hours (in the present example, 2 h); and in water with a low ammonium concentration *t4,* it will be minutes.

### Period c)

Once the duration *t4* established for active aeration control during period b) has been surpassed, period c) is started, initially with the last aeration regimen conditions imposed during the previous period b).

These conditions will be maintained until the end of period c) as long as a sustained increase in dissolved oxygen (DO) above a second specific threshold value ref2 SLOPE is not detected.

One way to determine if an increase in dissolved oxygen (DO) is sustained is the same as that used to determine the transition between the feast period a) and famine period b) explained by means of example above.

The value of the second specific threshold value ref2 SLOPE can be equal to or different from the first specific threshold value ref1 SLOPE, used as a reference to determine the transition between periods a) and b). Preferably, the second threshold value ref2 SLOPE is selected to be lower than the first threshold value ref2 SLOPE. More preferably, the second threshold value is selected to be about half the first threshold reference value.

Consequently, a possible value for the second threshold reference value can be 0.5 mg O₂/l/h.

### Practical example

The method according to the invention has been tested in laboratory-scale prototypes, with reactors with a capacity of 30 l with 4 types of wastewater: dairy industry, pig manure, fish and shellfish canning industry and municipal wastewater.

The reactors are built using methacrylate and designed with a total height / diameter (H/D) = 4 and H/D taking into account the level of the liquid = 3.

The reactors are equipped with a conventional fine bubble diffuser in the lower part through which aeration is provided by means of using blowing equipment with a vacuum pump and also with a mechanical agitator.

### Granular culture

The reactors were made to operate initially in sequential batch mode with the following phases: feed (without aeration), reaction (aeration), settling and removal of the effluent. The total duration of the cycle was 6-8 h.

The average composition of the raw influent is shown in Table 2.

**Table 2: average composition of pig manure in a practical example.**

| **Influent** | **(mg/l)** |
|---|---|
| **tCOD** | 5830 |
| **sCOD** | 2925 |
| **TS** | 6224 |
| **VS** | 3354 |
| **TN-N** | 1285 |
| **NH4-N** | 1006 |
| **NO3-N** | 5.51 |
| **TP** | 52.0 |

Due to the possible inhibition of the substrate (the manure fed into the granular sludge reactor), the influent was diluted to achieve an NH4-N concentration lower than 500 mg N/l.

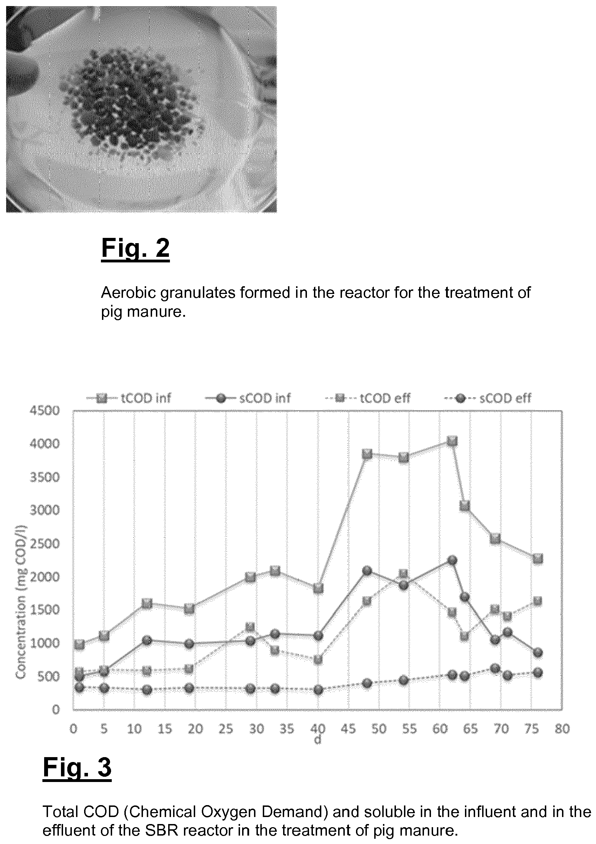

The granulation was achieved after 36 days (Fig. 2). The stable granules presented a size of 2-3 mm in diameter, a density of 81 gSSV/l granule and a sludge volumetric index SVI₅ = SVI₃₀ of 53 ml/gST.

The duration of the different phases in each cycle was the following:
- Feed: 2.5 min.
- Reaction (aeration): 353 min (cycle of 6 hours); 473 min (cycle of 8 hours)
- Settling: from 10 min to 1 min (starting from 10 min and progressively decreasing).
- Removal of effluent: 3 min.
- Inactivity time: 0.5 min.

### Treatment without active aeration control.

The aeration applied was 30 l/min from the lower part of the reactor through the fine bubble diffuser. The exchange volume ratio was 33-45 %, the feed flow rate was 40 l/*d* and the hydraulic retention time was 18 hours.

Fig. 3 shows the yield for the removal of organic matter in the system for a period of 76 days. The average efficiency for removal of tCOD and sCOD was 54 ± 8 % and 69 ± 7 %, respectively. This removal occurs due to oxidation of the organic matter and due to COD accumulation as a biopolymer inside the cells of the bacteria during the feast period.

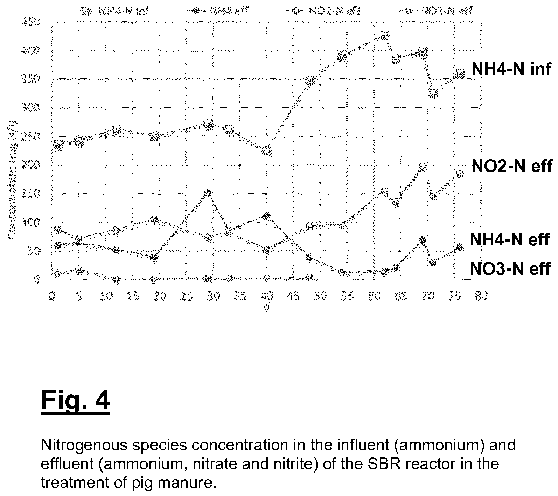

With respect to nitrogen species, Fig. 4 shows the conversion of nitrogen species in the system. The removal of ammonium was 82 ± 13 % and the total efficiency of the removal of nitrogen only reached 44 ± 14 %. This means that nitrification was high (conversion of ammonium into nitrite and/or nitrate), which occurs under aerobic conditions. However, denitrification (reduction of nitrite and/or nitrate to nitrogen gas) was not complete, with a significant nitrite fraction remaining in the effluent (see Fig. 4). Removal of the nitrite and, therefore, of the total nitrogen needs an electron donor (organic matter when the bacteria responsible for same is heterotrophic) and anoxic conditions. Accordingly, better oxygen control could lead to establishing a sufficient anoxic fraction in the granules and improving the removal of nitrogen if the available organic matter does not limit conversion.

### Treatment with aeration control

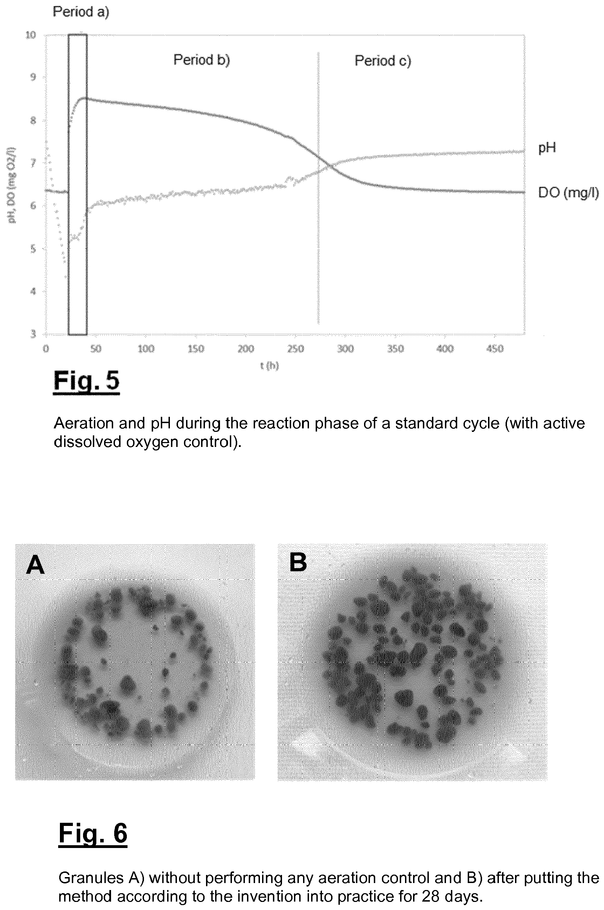

The method of the present invention was followed for 28 days of operation. Aeration and pH during 1 representative cycle are shown in Fig. 5. The duration of periods a), b) and c) of the reaction phase have been identified in said Fig. 5.

The treatment with aeration control was performed during cycles with an 8 h duration, with the following characterisation:
Period a): (33-43 min): Aeration was not controlled and was established at 70 % of the capacity of the blower (30 l/min). This step corresponds to the feast period of the cycles, in which biodegradable organic matter is removed. The increase in dissolved oxygen concentration and the start of period b) was detected with the condition: ref1SLOPE > 1 mgO₂/l/h during a period t2 of at least 15 minutes.
Period b): (222-242 min): Nitrification and the conversion of ammonium occur during this period. The drop in pH during this period confirms the nitrification process (see Fig. 5).
   It should be noted that pH can be used as a secondary measurement for the dissolved oxygen (DO) to verify the rise in dissolved oxygen in period c). The use of a second measurement or variable for the detection of the change of periods or events during the present invention, besides the dissolved oxygen (DO), increases the reliability of the method. The change of periods is thereby verified twice, and in the event of potential problems with the DO probe, said problems could be detected and actuated for correcting them in the following operating cycle (example: increasing the cleaning or calibration frequency of the DO probe).
   Having said that, in the present example during period b), aeration was controlled to maintain a dissolved oxygen (DO) concentration in the reactor of 5.5-6.0 mgO₂/l. This setting point was selected to be relatively high so as not to limit nitrification. Mechanical agitation was used to keep the level of dissolved oxygen (DO) within the target range.
Period c): (193-213 min): after period b), another sustained increase in dissolved oxygen (DO) concentration was detected. The condition to determine this sustained increase was: ref2SLOPE > 0.5 mgO₂/l/h during a period of at least 15 minutes. Aeration was reduced to a minimum according to the specifications of the vacuum pump providing aeration and mechanical agitation was applied.

Table 3 summarises the parameters established during the reaction phase of the cycles.

**Table 3: Parameters established during the reaction phase of the cycles (with active dissolved oxygen (DO) concentration control).**

| **Period a)** | | **Period b)** | | **Period c)** | |
|---|---|---|---|---|---|
| Minimum time before starting to detect a sustained increase in dissolved oxygen (DO) concentration | 10 min | SLOPE | > 1 mg O₂/l/h | SLOPE | > 0.5 mg O2/l/h |
| | | | 15 min | | 15 min |
| | | DO-L | 5.5 mg O₂/l | Minimum aeration | |
| | | DO-H | 6.0 mg O₂/l | Mechanical agitation | |

By applying this strategy, the following results and improvements were obtained:
- The efficiency of total nitrogen (TN) removal increased compared to the case without aeration control by 36 % (the efficiency of TN removal was 60 ± 5 % with control and 44 ± 14 % without control). This was possible due to the improvement in denitrification of oxidised nitrogen species upon reducing aeration in the last period of the cycle.
- The reduction of energy of the operation without aeration control was 45-55 %. This reduction is based on only taking into account consumption associated with the vacuum pump and without considering the consumption of any other equipment of the reactor. In the case of the treatment of wastewater with a lower nitrogen content than in the water of the present example case, aeration control could provide higher energy saving values than those reached, since less aeration would be required for nitrification.
- The reduction of aeration after the feast period (Period a)) and the applied mechanical agitation had no negative effect on the stability of the granules. The mechanical mixture was even positive, with more compact granules being developed. The granules acquired a darker brown colour compared to the granules during the cycles without aeration control (Fig. 6). It should be mentioned and emphasized that a key aspect in preventing any perturbation in the properties of the granules and preventing the growth of unwanted microorganisms (for example, filamentous bacteria) occurs in the present invention by applying a reduction and aeration control after the feast phase (Period a)).

## Claims

1. A method for removing nitrogen from wastewater in a sequencing batch reactor (SBR) with an aerobic granular biomass, which comprises performing consecutive treatment cycles comprising a reaction phase, between at least partial reactor filling and draining operations, during which the level of dissolved oxygen (DO) in the water is monitored, and wherein said reaction phase comprises
- a first feast period a) under aerobic conditions, until the removal of substantially all the biodegradable organic matter,
- a second famine period b), during which there is an active aeration control to keep the dissolved oxygen (DO) within a pre-established range to promote nitrification and denitrification processes, and
- a third also famine period c), which utilises the inertia of the conditions reached inside the reactor to promote denitrification and the removal of total nitrogen.

2. The method according to claim 1, **characterised in that** during the feast period a) aeration is maintained at a constant regimen and **in that** the duration *t1* of period a) is, at minimum, that necessary to reach a stable dissolved oxygen (DO) concentration.

3. The method according to the preceding claim, **characterised in that** the stable dissolved oxygen (DO) concentration corresponds to 60-70 % of the saturation concentration.

4. The method according to claim 2 or 3, **characterised in that** the transition between period a) and period b) is triggered when, with the duration *t1* of the first period a) having been surpassed, a sustained increase in dissolved oxygen (DO) above a first predetermined threshold value is detected.

5. The method according to the preceding claim, **characterised in that** there is considered to be a sustained increase in dissolved oxygen (DO) when a dissolved oxygen slope indicator (SLOPE) is greater than the first predetermined threshold value (ref1 SLOPE) during a period t2.

6. The method according to the preceding claim, **characterised in that** the period t2 is selected from 5 to 20 min.

7. The method according to claims 5 or 6, **characterised in that** the first predetermined threshold value (ref1 SLOPE) is selected from 0.1 to 2 mg O₂/l/h.

8. The method according to any one of claims 5 to 7, **characterised in that** the value of this indicator (SLOPE) is estimated: $SLOPE = \frac{DOʹ \left({t}_{n}\right) - DOʹ \left({t}_{n - k}\right)}{{t}_{n} - {t}_{n - k}}$ where
tₙ is the moment of calculation
tₙ₋ₖ is a prior moment
DO' is a mean of the instantaneous DO value and of the DO value from several prior moments.

9. The method according to any one of the preceding claims, **characterised in that** during the second period b), of duration *t4,* a control logic is applied to keep the dissolved oxygen (DO) value between a low threshold value (DO-L) and a high threshold value (DO-H) which contemplates
a) comparing the instantaneous dissolved oxygen (DO) value with the low threshold value (DO-L) and high threshold value (DO-H);
b) reducing the aeration regimen if the instantaneous dissolved oxygen (DO) value is greater than the high threshold value (DO-H) or increasing the aeration regimen if the instantaneous dissolved oxygen (DO) value is lower than the low threshold value (DO-L);
c) waiting for a stabilisation period t3 and repeating in a loop the sequence a), b) c).

10. The method according to the preceding claim, **characterised in that** the low threshold value (DO-L) and high threshold value (DO-H) pair is selected within the range 1 to 6 mg O2/l.

11. The method according to the preceding claim, **characterised in that** the low threshold value (DO-L) and high threshold value (DO-H) pair is selected within the range 4 to 6 mg O2/l.

12. The method according to any one of the preceding claims, **characterised in that** the duration *t4* of the period b) is lower than that needed to obtain complete oxidation of ammonium.

13. The method according to the preceding claim, **characterised in that** upon reaching the duration *t4* established for active aeration control during period b), period c) is started, initially maintaining the last aeration regimen conditions imposed at the end of the previous period b), and **in that** said conditions are maintained until the end of period c) as long as a sustained increase in dissolved oxygen (DO) above a second specific threshold value (ref2 SLOPE) is not detected.

14. The method according to the preceding claim, **characterised in that** the criterion applied to determine if there is a sustained increase in dissolved oxygen (DO) during period c) is the same applied to trigger the transition between period a) and period b).

15. The method according to claim 13, **characterised in that** the second predetermined threshold value (ref2 SLOPE) is selected to be lower than or equal to the first predetermined threshold value (ref1 SLOPE).

16. The method according to any one of claims 13 to 15, **characterised in that** if a sustained increase in dissolved oxygen (DO) above the second specific threshold value (ref2 SLOPE) during period c) is detected, the aeration regimen is reduced to a minimum or only mechanical agitation is applied to the water being treated until the end of period c).
